# EUROPEAN PATENT SPECIFICATION

(11) **EP 3 657 379 B1**
(45) Date of publication and mention of the grant of the patent: **18.02.2026**
(21) Application number: 18208206.5
(22) Date of filing: 26.11.2018
(51) Int. Cl.: G06V 20/56

(54) **A NEURAL NETWORK IMAGE PROCESSING APPARATUS FOR DETECTING SOILING OF AN IMAGE CAPTURING DEVICE**
BILDVERARBEITUNGSVORRICHTUNG FÜR EIN NEURONALES NETZWERK ZUR ERKENNUNG VON VERUNREINIGUNGEN EINER BILDAUFNAHMEVORRICHTUNG
APPAREIL DE TRAITEMENT D'IMAGE DE RÉSEAU NEURONAL POUR DÉTECTER LA SALISSURE D'UN DISPOSITIF DE CAPTURE D'IMAGE

(43) Date of publication of application: 27.05.2020
(73) Proprietor: Connaught Electronics Ltd., Tuam, County Galway (IE)
(72) Inventor: Viswanath, Prashanth, Tuam, County Galway (IE); Sistu, Ganesh, Tuam, County Galway (IE); Yogamani, Senthil, Tuam, County Galway (IE)
(74) Representative: Jauregui Urbahn, Kristian

(56) References cited:
- US-A1- 2005 254 688
- US-A1- 2009 174 773
- US-A1- 2017 163 886
- US-A1- 2017 270 368

## Description

### Field

The present application relates to a neural network image processing apparatus and a method for processing an image with a neural network apparatus.

### Background

Vehicle systems, such as automatic emergency braking, autonomous parking or driving systems, use image capture devices to detect objects such as cars and/or pedestrians in the environment of a vehicle with a view to controlling, braking or steering the vehicle, as required.

There is a need to detect the presence of an impediment to light passing through the lens of such image capture devices, and in particular, to detect the presence of an impediment, for example dirt, on the lens of vehicle mounted image capture devices.

EP2351351 B1 discloses a method for detecting the presence of dirt on the lens of a camera comprising passing image data of sequentially captured images through a high pass filter for detecting predefined areas in the captured image frames, the image data of which is indicative of an area of low or no high spatial frequency content, which could possibly be as a result of dirt on the lens. The locations of the predefined areas in which the image data thereof is indicative of an area of low or no high spatial frequency content in the currently captured image frame is stored in memory, for comparison with the next captured image frame.

EP2795582 B1 discloses a method in which respective fields of view of a first camera and a second camera overlap at least in a partial region. At least in an image captured by the first camera, at least one contamination region including a plurality of pixels is detected within the partial region. Thereupon, data values specifying the respective transparency of the pixels in the at least one contamination region are varied with respect to respective reference values of the transparency, wherein these reference values increase in the partial region towards an edge of the respective image upon superimposition of the images.

WO2017/021417 discloses a camera system in which a micro-lens array is disposed in front of at least one image sensor of a plenoptic camera of the camera system and an image of an environmental region of the motor vehicle is captured by the plenoptic camera, wherein a deposition of particles on an optical system of the plenoptic camera is identified based on at least one characteristic of an image area at least of the image.

US 2017/270368 A1 discloses a method for detecting contamination, such as dirt, dust or rain, of an optical component of a surroundings sensor or external camera of a vehicle. An image signal comprising an image area from the camera is read and processed by a machine-taught classifier to detect the contamination in the image area.

It is an object of the present invention to improve such systems.

### Summary

Accordingly, in a first aspect the application provides a neural network image processing apparatus as detailed in claim 1.

In a further aspect there is provided a method for processing an image at a neural network apparatus as detailed in claim 16.

In still a further aspect, there is provided a computer program product which when executed on a computing device is arranged to perform the method of claim 17.

In another aspect, there is provided a vehicle comprising a neural network image processing apparatus of claim 1.

Advantageous embodiments are provided in the dependent claims.

Embodiments of the present invention can detect if any given image capturing device within a plurality of image capturing devices is soiled and, depending on a soiling score, only then perform tasks such as object detection, semantic segmentation or soiling segmentation on images produced by the image capturing device.

Embodiments use soiling conditions from at least one image capturing device other than the given image capturing device and that has a different field of view than the given image capturing device to boost decision-making in relation to soiling of the given image capturing device. This can be performed for each image capturing device of the system in turn. Embodiments can be trained end-to-end so that all components of the apparatus are fully synergized to work together optimally.

Some embodiments provide soiling types of various classes (e.g. opaque, frost, water, broken lens, etc) as well as or as an alternative to a generic soiling classification.

### Brief Description Of The Drawings

Figure 1 illustrates a vehicle comprising image capturing devices which are connected to a neural network image processing apparatus according to an embodiment of the invention; and
Figure 2 is a block diagram illustrating a configuration of a neural network image processing apparatus according to an embodiment of the invention.

### Detailed Description of the Drawings

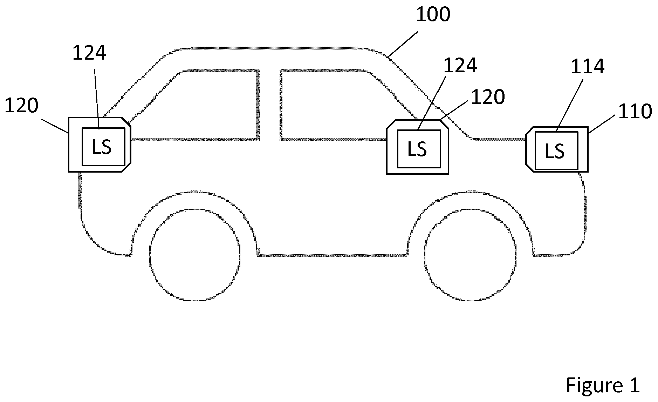

In Figure 1 there is shown a vehicle 100 comprising a plurality of image capturing devices 110, 120. In the embodiment, the plurality of image capturing devices are designated as a first image capturing device 110 and one or more additional image capturing devices 120 (only two of which are shown). In the example, a front facing image capturing device 110 is designated as the first image capturing device 110. The additional image capturing devices 120 include: a rear facing image capturing device; a left facing image capturing device (not shown); and a right facing image capturing device.

Image capturing devices 110, 120 can comprise any type of image capturing device. For example, an image capturing device may be a camera of the type commonly referred to as a digital camera. Such cameras may be, for example, CMOS cameras, charged coupled device (CCD) cameras and the like. It will be appreciated that the image capturing devices 110, 120 can be the same or different types of devices and that the image capturing device may be able to capture an image in the visible and/or not visible spectrum including either ultra-violet or infra-red image information. Nonetheless, as will be appreciated from the description below, as a common feature extraction processor will interface with images provided from each of the devices 110, 120, the form of the image information provided by each image capturing device 110, 120 needs to be at least the same resolution and a compatible format.

Images captured from the devices 110, 120 can also be processed to select a region of interest (ROI) from the image and/or to reduce its resolution. The image or ROI can comprise image information in any combination of intensity planes, such as YCC, YUV or LAB; or any combination of colour planes, for example, RGB. Alternatively, or in addition, the image or ROI can contain values derived from a captured image such as a Histogram of Gradients (HOG) map or DCT coefficients or the image can comprise the result of a transform of a captured image, for example, a Hough transform.

In the embodiment, the image capturing devices 110, 120 have a 2 Mega Pixel (MP) resolution and the resolution of the captured image may be advantageously downsized to 1 MP to obtain input images, each having 3 1024x960 image planes.

The front facing image capturing device 110 may be mounted in any desired location on the vehicle 100 for capturing a downward looking plan view of the ground towards the front of the vehicle or for capturing an image looking in a generally forward direction from the vehicle 100. So for example, while the image capturing device 110, is illustrated mounted at or in the front grille of the vehicle 100, the image capturing device 110 could also be located within an overhead console unit (not shown) located within the cabin of the vehicle or the image capturing device 110 could be located on a forward facing surface of a rear view mirror (not shown).

The rear facing image capturing device 120 may also be mounted in any desired location on the vehicle 100 for capturing a downward looking plan view of the ground towards the rear of the vehicle or for capturing an image looking in a generally backward direction from the vehicle 100.

Again, while the rear facing image capturing device 120 is shown mounted at a rear panel of the vehicle, the rear facing image capturing device could also be mounted inside a rear windscreen or indeed the rear facing image capturing device could comprise one or other of a pair of rear facing wing mirror mounted cameras.

The right facing image capturing device 120 may be mounted in any desired location on the vehicle for capturing a downward looking plan view of the ground towards the right of the vehicle or for capturing an image looking in a generally leftward direction from the vehicle 100.

Similarly, the left facing image capturing device (not shown) may be mounted in any desired location on the vehicle for capturing a downward looking plan view of the ground towards the left of the vehicle or for capturing an image looking in a generally leftward direction from the vehicle 100.

Typically, the left/right image capturing devices could comprise one or other of a side facing wing mirror mounted camera, but such capturing devices could also be mounted at a side middle panel of the vehicle or inside a side windscreen.

In any case, it will be seen that the image capturing devices 110, 120 have a field of view different from one another to the extent that in some cases, the fields of view may not even overlap.

In the embodiment, each image capturing device 110, 120 comprises a respective light sensor 114, 124 to sense the ambient light level intensity and output a value (L1, L2...L2n) indicating the intensity of light detected in the respective field of view of the image capturing device. The sensor may comprise a discrete sensor separate from an image sensor of the image capturing devices 110, 120 or ambient light level intensity can be determined directly from the image sensor.

The vehicle 100 may also be fitted with one or more sensors including at least one of: a vehicle internal ambient temperature sensor; an external ambient temperature sensor; an external ambient pressure sensor; a vehicle internal humidity sensor; and an external humidity sensor. Each sensor provides a value indicative of the intensity of the detected parameter.

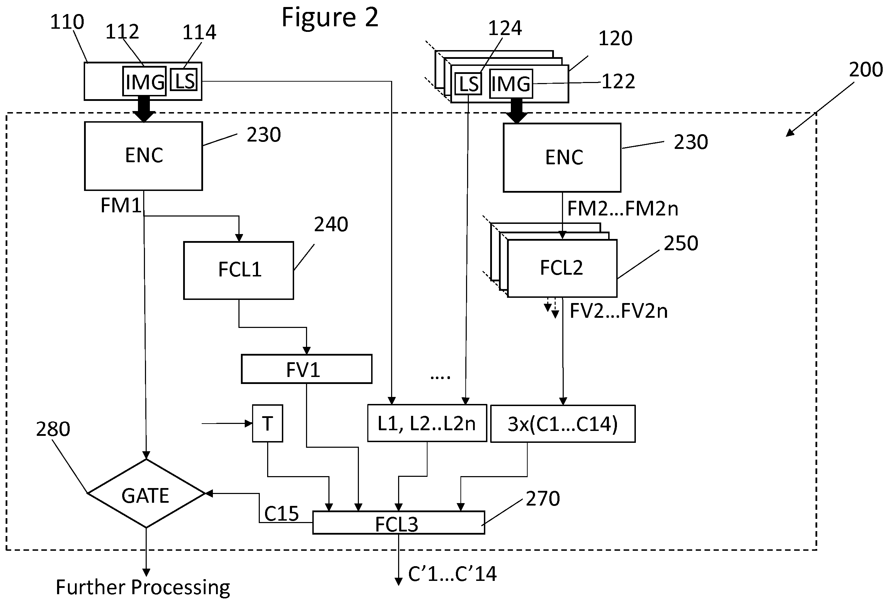

Referring now to Figure 2 there is shown a block diagram of a neural network image processing apparatus 200 according to an embodiment of the present invention.

The embodiment is implemented with convolutional neural network (CNN) type network designs. Although it will be appreciated that variants of the embodiment may be based on other forms of processing network including for example, R-CNNs (Region Based Convolution Neural Network).

The apparatus 200 includes one or more processors (not shown) capable of processing instances of the various types of convolutional layers and fully connected (FC) layers comprising CNNs and the functional relationship between these layers is shown in Figure 2. As such, the physical apparatus which underlies the structure illustrated in Figure 2 may comprise: a single general processor which performs the processing required by each illustrated block; a dedicated processor specifically arranged for handling the processing of neural network layers; or a multi-processor core comprising a plurality of either dedicated or general-purpose processors which may perform certain processing in parallel. It will be appreciated that the term general purpose processor applies to large instruction set processors as well as RISC processors such as those provided by ARM.

The apparatus 200 is coupled to the plurality of image capturing devices 110, 120 to obtain input images 112, 122 from the plurality of image capturing devices 110, 120. As explained above, these input images may be processed or cropped ROIs and may comprise maps derived from or transformations of the original input image information - for simplicity, these are referred to below as input images.

Input images 112, 122 are fed through respective instances of a CNN encoder 230 that performs feature extraction from the input images to produce a respective feature map from each of the input images (FM1, FM2...FM2n). As indicated above, depending on the processing platform which is available within the apparatus 200, instances of CNN encoder 230 can be executed sequentially or in parallel.

The CNN encoder 230 comprises a number of processing layers 1 to N. Each layer comprises a convolution followed by optional subsampling. Each layer produces one or more feature maps. The size of the resulting map after each convolution layer may be reduced by subsampling (examples of which are average pooling or max-pooling) and/or by using a stride greater than 1 within a convolutional layer. For example, a first convolution layer performs 2D convolution of an original 2D image to produce its output map, while subsequent convolution layers perform convolutions using the output maps produced by the previous layer as inputs to produce an output feature map from the input image. In the embodiment, the final feature map has a lower spatial resolution than the corresponding input image 112 and it is this feature map which includes information that will be used to classify whether there is soiling of the original image 112 produced by the first image capturing device 110.

CNN encoder 230 can comprise any type of architecture such as, but not limited to: a ResNet; a DenseNet; or a VNet. The CNN encoder 230 architecture may also include any number of layers. It is appreciated that depending on the type and/or size of the architecture the resulting height, width and channel/depth dimension of the output map of the CNN encoder 230 may vary.

In a first example, the CNN encoder 230 can comprise a ResNet50 (50 layers) architecture. In this case, if the input image size is 1024x960x3, the output map of the ResNet50 architecture would be 32x30x2048 (32 height pixels, 30 width pixels, 2048 channels or depth dimension).

Accordingly, the height and width of the input image are reduced by a factor of 32 in response to the ResNet50 architecture. The resulting depth dimension depends on the ResNet50 architecture.

In an alternative example, the CNN encoder 230 can comprise a VNet8 (8 layers) architecture. In this case, if the input image size were 1280x960x3, the output map of a VNet8 architecture would be 40x30x512 (40 height pixels, 30 width pixels, 518 channels or depth dimension). Again, the resulting depth dimension depends on the VNet8 architecture.

Each of the feature maps FM1, FN2...FM2n produced by respective instances of the encoder 230 is fed to instances of respective fully connected networks FCL1 and FCL2. The first fully connected network 240 (FCL1) and the second fully connected network 250 (FCL2) perform initial classification of the received feature maps from the instances of CNN encoder 230, with fully connected network FCL1 being connected to the output of the instance of CNN encoder 230 connected to the first image capturing device 110; and respective instances of fully connected network FCL2 being connected to the output of the instances of CNN encoder 230 connected to each of the additional image capturing devices 120. The feature maps values of FM1, FM2...FM2n are fed to nodes of an input layer of respective networks FCL1 and FCL2 where they are combined with weights and fed through an activation function to provide a set of output values to a successive layer and so on until the final output layer of each network FCL1, FCL2 provides a one-dimensional array of features (FV1) from the first FC layer 240 and one-dimensional array of features (FV2...FV2n) from each instance of the second FC network 250.

As will be explained later, the combined encoders 230 and fully connected networks 240, 250 are trained using suitably annotated training images so that for any probe image, each feature vector FV1 and FV2...FV2n indicates a soiling of a corresponding input image. Note that the annotated training images can also be provided with annotations for tasks unrelated to soiling, for example, for object detection, semantic segmentation or soiling segmentation as will be explained below.

In some embodiments, each element of the feature vectors FV1 and FV2...FV2n comprises a probabilistic measure between 0...1, but it will be appreciated that other ranges such as [-1 to 1] could also be used.

As indicated, in the illustrated example, the apparatus 200 is testing whether an image produced by first image capturing device 110 is soiled.

Thus, in one example, where the output map of the CNN encoder 230 is 40x30x512 (614000) bytes in size for each one of an input image 112 provided by the first image capturing device 110, the output vector FV1 of the first FC layer 240 would be 6144 bytes.

Separately, in the present embodiment, each instance of the fully connected layer FCL2 250 processes a respective feature map FM2...FM2n to produce an output feature vector FV2...FV2n comprising 14 values, each element of the vector, C1...C14, comprising a confidence score corresponding to a class of soiling, which may be affecting the image provided by a respective image capturing device from the additional image capturing devices 120.

In one example, the classes include mud; sand; grass; dust; water; rain drops; oil; wax; vaseline; polish; salt-spray; transparent; opaque; and other, although it will be appreciated that in variants of the embodiment fewer or more classes may be used - or indeed only a single generic soiling classification may be provided by each instance of FCL2 250.

In the embodiment, the 3x14 classifications provided by each instance of FCL2, 250, along with the light levels provided by the sensors 114,124, the feature vector FV1 provided by the FCL1, 240 and the temperature value provided by the temperature sensor are concatenated to provide an input to a further fully connected layer FCL3, 270. In variants of the embodiment sensor values from sensors such as those listed above can be used in addition or as an alternative to the light and temperature values provided by those sensors.

Also, it will be appreciated that the classification networks 240, 250 do not need to be limited to comprising fully connected layers only and for example, may also comprise further convolutional layers, if required.

In any case, the fully connected layer FCL3 270 is arranged to provide soiling classifications C1'...C'14 for the corresponding first image 112 based on these inputs as well as a generic soiling classification C15. Again, each output of FCL3 270, can comprise a probabilistic measure between 0...1, but equally any range of values indicating either generic soiling C15 or a specific class of soiling can be employed.

Providing individual soiling classifications C1'...C'14 as well as the generic classification C15 means that if an image produced by the designated first image capturing device 110 is determined to be soiled, for example, by frost, then a vehicle controller (not shown) which receives the classifications C'1...C'14 for the image capturing device 110 can cause a cleaning system to clean the device 110 by heating; whereas if an image produced by the designated first image capturing device 110 is determined to be soiled by dirt, then the cleaning system might better spray water on the device 110.

In any case, the classifications C1...C14 derived from the additional image capturing devices 120 can boost the soiling classification which might otherwise have been derived only from the first image 112 itself.

As well as using classifications derived from the additional image capturing devices 120, it will be seen how incorporating sensor values can boost the accuracy of confidence levels produced for various types of soiling of the first image capturing device 110. For example, if the ambient temperature value is close to 0 degree centigrade, FCL3 270 may be able to provide higher confidence scores or better discriminate probe images from the image capturing device 110 that are soiled by ice or frost.

It will be seen that once a set of classifications C'1...C'14, C15 has been produced for a designated first image capturing device 110, any of the additional image capturing devices 120 can then be designated as the first image capturing device 110.

In this case, it will not be necessary to re-execute instances of the encoders 230 which were used in generating the soiling classifications for the original designated first image capturing device 110, but it will be necessary to execute an instance of FCL1 for the feature map produced by encoder 230 from the additional image capturing device 120 chosen as the designated first image capturing device 110; and equally to execute an instance of FCL2 for the feature map produced by the encoder 230 from the previous designated first image capturing device 110 now being employed as an additional image capturing device 120.

Nonetheless, it will be appreciated that as changes in soiling occur relatively unfrequently by comparison to the rate at which tasks such as object detection may need to be performed, for example, by an autonomous vehicle, classification networks FCL1...FCL3 need only execute for any given first image capturing device 110 at a much lower frequency, possibly less than one per second, than for example object detection classifiers, which might be required to run at a frame rate of greater than 30 frames per second.

It will also be appreciated that if soiling of a given image capturing device, for example, the front image capturing device, within a number of image capturing devices is more critical than for others, processing by the apparatus 200 of images produced by this device as a first image capturing device 110 can be more frequent than for others of the image capturing devices.

In any case, when the soiling classification for a given first image capturing device 110 indicates that the level of soiling of an image is below a threshold level, then further processing of the image 112 and images subsequently acquired by the given first image capturing device 110 until classification is re-executed can be performed.

One type of such further processing comprises providing a soiling map for the first image capturing device 110, a process referred to as soiling segmentation. Soiling segmentation may comprise applying a decoder (not shown) to create a mask, potentially as large as the input image 112, from the feature map FM1 received from the CNN encoder 230, with each element of the mask indicating soiling of one or more pixels of the input image 112 in the vicinity of the element. The segmentation decoder can comprise any type of architecture such as, a standard FCN8, 16 or Deconv Net. The architecture of the segmentation decoder includes enough layers to upscale the spatial dimensions of the feature map FM1 to those of the input image.

Nonetheless, it will be appreciated that generating such a soiling mask is computationally expensive and as such, it is desirable only to do so in circumstances where soiling is not so extensive as to preclude the possibility of other useful tasks which might be performed on the first image 112.

Indeed regenerating a soiling mask for any given image capturing device may only need to be done in response to fluctuations in the value of soiling classifications C'1...C'14, C15 provided by the apparatus 200.

As indicated, one such useful task which might be performed using the feature map FM1 produced from the first image 112 is object detection, with a view to identifying one or more regions of an image bounding an object of a given class, for example, as described at https://towardsdatascience.com/r-cnn-fast-r-cnn-faster-r-cnn-yolo-object-detection-algorithms-36d53571365e. Such object detection can be performed in conjunction with a soiling mask to improve the discrimination of such object detection. Other tasks comprise semantic segmentation which involves dividing an image into sub-regions and labelling these in accordance with their content, thus each pixel is labelled with the class of its enclosing object or region. More information on semantic segmentation can be found at https://sthalles.github.io/deep_segmentation_network/; or https://www.jeremyjordan.me/semantic-segmentation/. Indeed, similar techniques for performing general semantic segmentation can be employed for soiling segmentation, to divide an image into pixels classified as either being affected by soiling or not.

It will be appreciated that consideration needs to be given to training systems including the apparatus 200 as well as further processing stages, where a given encoder 230 is used to produce a feature map FM1, FM2..FM2n which will in turn be used to produce soiling classifications through networks FCL1...FCL3, but which can be separately provided as a basis for performing soiling segmentation, semantic segmentation and/or object detection.

Such training can comprise iteratively training the system by first training the encoders 230 and the further processing stages such as object detectors based on unsoiled images. Note that sets of unsoiled images provided to the apparatus 200 during training should ideally be simultaneously acquired from the various image capturing devices 110, 120 along with simultaneous sensor values and light sensor values.

Now the classifier network comprising FCL1...FCL3 can be trained based on both soiled and non-soiled training images.

Then a soiling segmentation network can be trained for detecting soiled pixels and finally the complete network, with a trained soiling segmentation classifier network feeding into one or both of an object detection and/or a semantic segmentation classifier network, can be trained based on soiled and non-soiled images.

## Claims

1. A neural network image processing apparatus (200) comprising:
- a first image capturing device (110) obtaining a first image (112) and at least one additional image capturing device (120) obtaining a respective additional image (124), wherein the first image capturing device has a field of view different than the or each additional image capturing device;
- a common feature extraction processing network (230) for processing said first image (112) and the or each additional image (124) through respective instances to produce a respective first feature map (FM1) and at least one additional feature map (FM2...FM2n), each feature map having a lower spatial resolution than said first image and the or each additional image;
- classification networks (240, 250) performing feature classification with : a
first classification network (240) processing said first feature map to provide an output feature vector corresponding to a first classification (FV1) indicating a soiling of said first image; and
additional classification networks (250) processing the or each additional feature map to provide at least one additional feature vector corresponding to
an additional classification (FV2...FV2n) indicating a respective soiling of said the or each additional image,
the classification (FV2...FV2n) being in form of a one-dimensional array of features; each element of the array (C1...C14) comprising
a confidence score corresponding to a class of soiling, and
- a fully connected layer network (270) combining said first and said the or each additional feature vectors to provide soiling classifications (C1'...C14') for the corresponding first image (112) as well as a boosted generic soiling classification (C15) indicating soiling of said first image; and
responsive to said boosted classification not indicating soiling of said first image capturing device, perform further processing of said first image based on said first feature map until classification is re-executed.

2. The neural network image processing apparatus of claim 1, further arranged to:
provide said first and the at least one additional classification at a frequency less than a frequency at which images are obtained by said first image capturing device.

3. The neural network image processing apparatus of claim 1, wherein said first and the or each additional classification comprises respective feature vectors, said first classification feature vector comprising more elements than the or each additional classification feature vector.

4. The neural network image processing apparatus of claim 3 wherein each element of the or each additional classification feature vector comprises a confidence level for a respective type of soiling of said additional image capturing device.

5. The neural network image processing apparatus of claim 4 wherein the types of soiling include one or more of: mud; sand; grass; dust; water; rain drops; oil; wax; vaseline; polish; salt-spray; transparent; opaque; and other.

6. The neural network image processing apparatus of claim 1, wherein said apparatus is further configured to perform soiling segmentation based on said first feature map to generate a mask for said first image capturing device, said mask comprising an array of elements, with each element indicating soiling of any image produced by said first image capturing device in the vicinity of said element.

7. The neural network image processing apparatus of claim 6, wherein said apparatus is arranged to combine said mask with a feature map derived from said first feature map to perform said object detection.

8. The neural network image processing apparatus of claim 1, wherein the apparatus is arranged to perform feature classification by:
concatenating said first and the at least one additional classifications; and
feeding said concatenated classification to a fully connected neural network to provide at least said boosted soiling classification.

9. The neural network image processing apparatus of claim 1, wherein the apparatus is arranged to obtain respective light level values (L1...L2n) associated with each of said first and the at least one additional images and to combine said light level values with said first and the at least one additional classifications to provide the boosted classification indicating soiling of said first image.

10. The neural network image processing apparatus of claim 1, wherein the apparatus is arranged to obtain one or more sensor output values (T) and to combine said sensor output values with said first and the at least one additional classifications to provide the boosted classification indicating soiling of said first image.

11. The neural network image processing apparatus of claim 10, wherein the one or more sensors comprises at least one of:
a vehicle internal ambient temperature sensor;
an external ambient temperature sensor;
an external ambient pressure sensor;
a vehicle internal humidity sensor; and
an external humidity sensor.

12. The neural network image processing apparatus of claim 1 wherein the first and the or each additional image capturing devices are each different devices in the group of:
a front facing image capturing device
a rear facing image capturing device;
a left facing image capturing device; or
a right facing image capturing device.

13. The neural network image processing apparatus of claim 1 configured to repeat the processing of a set of images acquired from a plurality of image capturing devices with a different one of the images capturing devices being designated as said first image capturing device.

14. The neural network image processing apparatus of claim 1 wherein the first and the or each additional image capturing devices are optical image capturing devices configured to obtain visible light images.

15. A vehicle comprising:
a neural network image processing apparatus of claim 1; and
a controller being responsive to said boosted classification indicating of a soiling affecting the first image to instruct a vehicle cleaning system to perform a cleaning of the lens of the first image capturing device.

16. A method for processing an image using a neural network apparatus according to claim 1, the method comprising:
obtaining a first image from a first image capturing device and a respective additional image from at least one additional image capturing device, wherein the first image capturing device has a field of view different than the or each additional image capturing device;
processing each of said first and the or each additional image through respective
first and additional instances of a common feature extraction processing network to produce a respective first feature map and at least one additional feature map, each having a lower spatial resolution than said first and the or each additional image;
performing feature classification by:
processing said first feature map through a first instance of a fully connected layer to provide an output feature vector corresponding to a first classification indicating a soiling of said first image;
processing the or each additional feature map through additional instances of the fully connected layer to provide at least one additional feature vector corresponding to additional classification indicating a respective soiling of said the or each additional image wherein the classification being in form of a one-dimensional array of features; each element of the array (C1...C14) comprising a confidence score corresponding to a class of soiling, and
combining said first and the or each additional output feature vectors to provide soiling classifications (C1'...C14') for the corresponding first image (112) as well as a boosted generic soiling classification indicating soiling of said first image; and
responsive to said boosted classification not indicating soiling of said first image capturing device, performing further processing of said first image based on said first feature map until classification is re-executed

17. A computer program product which when executed on a computing device is arranged to perform the method of claim 16.

## Patentansprüche

1. Eine neuronale Netzwerk-Bildverarbeitungsvorrichtung (200), umfassend:
- eine erste Bilderfassungsvorrichtung (110), die ein erstes Bild (112) erhält, und mindestens eine zusätzliche Bilderfassungsvorrichtung (120), die ein jeweiliges zusätzliches Bild (124) erhält, wobei die erste Bilderfassungsvorrichtung ein Sichtfeld hat, das sich von dem der oder jeder zusätzlichen Bilderfassungsvorrichtung unterscheidet;
- ein gemeinsames Merkmalsextraktionsverarbeitungsnetzwerk (230) zur Verarbeitung des ersten Bildes (112) und des oder jedes zusätzlichen Bildes (124) durch jeweilige Instanzen, um eine jeweilige erste Merkmalskarte (FM1) und mindestens eine zusätzliche Merkmalskarte (FM2...FM2n) zu erzeugen, wobei jede Merkmalskarte eine niedrigere räumliche Auflösung als das erste Bild und das oder jedes zusätzliche Bild aufweist;
- Klassifizierungsnetzwerke (240, 250), die eine Merkmalsklassifizierung durchführen mit:
einem ersten Klassifizierungsnetzwerk (240), das die erste Merkmalskarte verarbeitet, um einen Ausgabemerkmalvektor entsprechend einer ersten Klassifizierung (FV1) bereitzustellen, die eine Verschmutzung des ersten Bildes anzeigt; und zusätzlichen Klassifizierungsnetzwerken (250), die die oder jede zusätzliche Merkmalskarte verarbeiten,
um mindestens einen zusätzlichen Merkmalsvektor bereitzustellen, der einer zusätzlichen Klassifizierung (FV2...FV2n) entspricht, die eine jeweilige Verschmutzung des oder jedes zusätzlichen Bildes anzeigt, wobei die Klassifizierung (FV2...FV2n) in Form eines eindimensionalen Arrays von Merkmalen vorliegt; wobei jedes Element des Arrays (C1...C14) einen Konfidenzwert umfasst, der einer Verschmutzungsklasse entspricht, und
ein vollständig verbundenes Schichtnetzwerk (270), das den ersten und den oder jeden zusätzlichen Merkmalsvektor kombiniert, um Verschmutzungsklassifizierungen (C1'...C14') für das entsprechende erste Bild (112) sowie eine verstärkte generische Klassifizierung (C15) bereitzustellen, die eine Verschmutzung des ersten Bildes anzeigt; und als Reaktion darauf, dass die verstärkte Klassifizierung keine Verschmutzung der ersten Bilderfassungsvorrichtung anzeigt, eine weitere Verarbeitung des ersten Bildes basierend auf der ersten Merkmalskarte durchführt, bis die Klassifizierung erneut ausgeführt wird.

2. Die neuronale Netzwerk-Bildverarbeitungsvorrichtung nach Anspruch 1, die ferner angeordnet ist, um: die erste und die mindestens eine zusätzliche Klassifizierung mit einer Frequenz bereitzustellen, die geringer ist als eine Frequenz, mit der Bilder von der ersten Bilderfassungsvorrichtung erhalten werden.

3. Die neuronale Netzwerk-Bildverarbeitungsvorrichtung nach Anspruch 1, wobei die erste und die oder jede zusätzliche Klassifizierung jeweilige Merkmalsvektoren umfasst, wobei der erste Klassifizierungsmerkmalvektor mehr Elemente umfasst als der oder jeder zusätzliche Klassifizierungsmerkmalvektor.

4. Die neuronale Netzwerk-Bildverarbeitungsvorrichtung nach Anspruch 3, wobei jedes Element des oder jedes zusätzlichen Klassifizierungsmerkmalvektors ein Konfidenzniveau für eine jeweilige Art der Verschmutzung der zusätzlichen Bilderfassungsvorrichtung umfasst.

5. Die neuronale Netzwerk-Bildverarbeitungsvorrichtung nach Anspruch 4, wobei die Arten der Verschmutzung eines oder mehrere der folgenden umfassen: Schlamm; Sand; Gras; Staub; Wasser; Regentropfen; Öl; Wachs; Vaseline; Politur; Salzsprühnebel; transparent; undurchsichtig; und andere.

6. Die neuronale Netzwerk-Bildverarbeitungsvorrichtung nach Anspruch 1, wobei die Vorrichtung ferner konfiguriert ist, eine Verschmutzungssegmentierung basierend auf der ersten Merkmalskarte durchzuführen, um eine Maske für die erste Bilderfassungsvorrichtung zu erzeugen, wobei die Maske ein Array von Elementen umfasst, wobei jedes Element eine Verschmutzung eines von der ersten Bilderfassungsvorrichtung erzeugten Bildes in der Nähe des Elements anzeigt.

7. Die neuronale Netzwerk-Bildverarbeitungsvorrichtung nach Anspruch 6, wobei die Vorrichtung angeordnet ist, um die Maske mit einer von der ersten Merkmalskarte abgeleiteten Merkmalskarte zu kombinieren, um die Objekterkennung durchzuführen.

8. Die neuronale Netzwerk-Bildverarbeitungsvorrichtung nach Anspruch 1, wobei die Vorrichtung angeordnet ist, um eine Merkmalsklassifizierung durchzuführen durch:
Verketten der ersten und der mindestens einen zusätzlichen Klassifizierung; und
Einspeisung der verketteten Klassifizierung in ein vollständig verbundenes neuronales Netzwerk, um mindestens die verstärkte Verschmutzungsklassifizierung bereitzustellen.

9. Die neuronale Netzwerk-Bildverarbeitungsvorrichtung nach Anspruch 1, wobei die Vorrichtung angeordnet ist, um jeweilige Lichtpegelwerte (L1...L2n) zu erhalten, die mit jedem der ersten und der mindestens einen zusätzlichen Bilder verbunden sind, und um diese Lichtpegelwerte mit der ersten und der mindestens einen zusätzlichen Klassifizierung zu kombinieren, um die verstärkte Klassifizierung bereitzustellen, die eine Verschmutzung des ersten Bildes anzeigt.

10. Die neuronale Netzwerk-Bildverarbeitungsvorrichtung nach Anspruch 1, wobei die Vorrichtung angeordnet ist, um einen oder mehrere Sensorausgabewerte (T) zu erhalten und um diese Sensorausgabewerte mit der ersten und der mindestens einen zusätzlichen Klassifizierung zu kombinieren, um die verstärkte Klassifizierung bereitzustellen, die eine Verschmutzung des ersten Bildes anzeigt.

11. Die neuronale Netzwerk-Bildverarbeitungsvorrichtung nach Anspruch 10, wobei der eine oder die mehreren Sensoren mindestens einen der folgenden umfasst: einen fahrzeuginternen Umgebungstemperatursensor; einen externen Umgebungstemperatursensor; einen externen Umgebungsdrucksensor; einen fahrzeuginternen Feuchtigkeitssensor; und einen externen Feuchtigkeitssensor.

12. Die neuronale Netzwerk-Bildverarbeitungsvorrichtung nach Anspruch 1, wobei die erste und die oder jede zusätzliche Bilderfassungsvorrichtung jeweils unterschiedliche Vorrichtungen in der Gruppe sind: eine nach vorne gerichtete Bilderfassungsvorrichtung, eine nach hinten gerichtete Bilderfassungsvorrichtung; eine nach links gerichtete Bilderfassungsvorrichtung; oder eine nach rechts gerichtete Bilderfassungsvorrichtung.

13. Die neuronale Netzwerk-Bildverarbeitungsvorrichtung nach Anspruch 1, die konfiguriert ist, die Verarbeitung eines Satzes von Bildern, die von einer Vielzahl von Bilderfassungsvorrichtungen erfasst wurden, zu wiederholen, wobei eine andere der Bilderfassungsvorrichtungen als die erste Bilderfassungsvorrichtung bezeichnet wird.

14. Die neuronale Netzwerk-Bildverarbeitungsvorrichtung nach Anspruch 1, wobei die erste und die oder jede zusätzliche Bilderfassungsvorrichtung optische Bilderfassungsvorrichtungen sind, die konfiguriert sind, um sichtbare Lichtbilder zu erhalten.

15. Ein Fahrzeug, umfassend: eine neuronale Netzwerk-Bildverarbeitungsvorrichtung nach Anspruch 1; und eine Steuerung, die auf die verstärkte Klassifizierung reagiert, die eine Verschmutzung anzeigt, die das erste Bild beeinträchtigt, um ein Fahrzeugreinigungssystem anzuweisen, eine Reinigung der Linse der ersten Bilderfassungsvorrichtung durchzuführen.

16. Ein Verfahren zur Verarbeitung eines Bildes unter Verwendung einer neuronalen Netzwerkvorrichtung nach Anspruch 1, das Verfahren umfassend: Erhalten eines ersten Bildes von einer ersten Bilderfassungsvorrichtung und eines jeweiligen zusätzlichen Bildes von mindestens einer zusätzlichen Bilderfassungsvorrichtung, wobei die erste Bilderfassungsvorrichtung ein Sichtfeld hat, das sich von dem der oder jeder zusätzlichen Bilderfassungsvorrichtung unterscheidet; Verarbeiten jedes der ersten und der oder jeder zusätzlichen Bilder durch jeweilige erste und zusätzliche Instanzen eines gemeinsamen Merkmalsextraktionsverarbeitungsnetzwerks, um eine jeweilige erste Merkmalskarte und mindestens eine zusätzliche Merkmalskarte zu erzeugen, die jeweils eine niedrigere räumliche Auflösung als das erste und das oder jedes zusätzliche Bild aufweisen; Durchführen einer Merkmalsklassifizierung durch: Verarbeiten der ersten Merkmalskarte durch eine erste Instanz einer vollständig verbundenen Schicht, um einen Ausgabemerkmalvektor bereitzustellen, der einer ersten Klassifizierung entspricht, die eine Verschmutzung des ersten Bildes anzeigt; Verarbeiten der oder jeder zusätzlichen Merkmalskarte durch zusätzliche Instanzen der vollständig verbundenen Schicht, um mindestens einen zusätzlichen Merkmalsvektor bereitzustellen, der einer zusätzlichen Klassifizierung entspricht, die eine jeweilige Verschmutzung des oder jedes zusätzlichen Bildes anzeigt, wobei die Klassifizierung in Form eines eindimensionalen Arrays von Merkmalen vorliegt; wobei jedes Element des Arrays (C1...C14) einen Konfidenzwert umfasst, der einer Verschmutzungsklasse entspricht, und Kombinieren des ersten und des oder jedes zusätzlichen Ausgabemerkmalvektors, um Verschmutzungsklassifizierungen (C1'...C14') für das entsprechende erste Bild (112) sowie eine verstärkte generische Verschmutzungsklassifizierung bereitzustellen, die eine Verschmutzung des ersten Bildes anzeigt; und als Reaktion darauf, dass die verstärkte Klassifizierung keine Verschmutzung der ersten Bilderfassungsvorrichtung anzeigt, eine weitere Verarbeitung des ersten Bildes basierend auf der ersten Merkmalskarte durchführt, bis die Klassifizierung erneut ausgeführt wird.

17. Ein Computerprogrammprodukt, das bei Ausführung auf einer Rechenvorrichtung angeordnet ist, um das Verfahren nach Anspruch 16 durchzuführen.

## Revendications

1. Un appareil de traitement d'image par réseau neuronal (200) comprenant :
- un premier dispositif de capture d'image (110) obtenant une première image (112) et au moins un dispositif de capture d'image supplémentaire (120) obtenant une image supplémentaire respective (124), où le premier dispositif de capture d'image a un champ de vision différent de celui du ou de chaque dispositif de capture d'image supplémentaire ;
- un réseau de traitement d'extraction de caractéristiques communes (230) pour traiter ladite première image (112) et la ou chaque image supplémentaire (124) à travers des instances respectives pour produire une première carte de caractéristiques respective (FM1) et au moins une carte de caractéristiques supplémentaire (FM2...FM2n), chaque carte de caractéristiques ayant une résolution spatiale inférieure à celle de ladite première image et de la ou chaque image supplémentaire ;
- des réseaux de classification (240, 250) effectuant une classification de caractéristiques avec : un premier réseau de classification (240) traitant ladite première carte de caractéristiques pour fournir un vecteur de caractéristiques de sortie correspondant à une première classification (FV1) indiquant un encrassement de ladite première image ; et des réseaux de classification supplémentaires (250) traitant la ou chaque carte de caractéristiques supplémentaire pour fournir au moins un vecteur de caractéristiques supplémentaire correspondant à une classification supplémentaire (FV2...FV2n) indiquant un encrassement respectif de ladite ou de chaque image supplémentaire, la classification (FV2...FV2n) étant sous forme d'un tableau unidimensionnel de caractéristiques ; chaque élément du tableau (C1...C14) comprenant un score de confiance correspondant à une classe d'encrassement, et un réseau de couche entièrement connectée (270) combinant lesdits premiers vecteurs de caractéristiques et ledit ou lesdits vecteurs de caractéristiques supplémentaires pour fournir des classifications d'encrassement (C1'...C14') pour la première image correspondante (112) ainsi qu'une classification générique améliorée (C15) indiquant l'encrassement de ladite première image ; et en réponse à ladite classification améliorée n'indiquant pas d'encrassement dudit premier dispositif de capture d'image, effectuer un traitement supplémentaire de ladite première image basé sur ladite première carte de caractéristiques jusqu'à ce que la classification soit ré-exécutée.

2. L'appareil de traitement d'image par réseau neuronal selon la revendication 1, configuré en outre pour : fournir ladite première classification et la ou les classifications supplémentaires à une fréquence inférieure à la fréquence à laquelle les images sont obtenues par ledit premier dispositif de capture d'image.

3. L'appareil de traitement d'image par réseau neuronal selon la revendication 1, dans lequel ladite première classification et la ou chaque classification supplémentaire comprennent des vecteurs de caractéristiques respectifs, ledit vecteur de caractéristiques de première classification comprenant plus d'éléments que le ou chaque vecteur de caractéristiques de classification supplémentaire.

4. L'appareil de traitement d'image par réseau neuronal selon la revendication 3, dans lequel chaque élément du ou de chaque vecteur de caractéristiques de classification supplémentaire comprend un niveau de confiance pour un type respectif d'encrassement dudit dispositif de capture d'image supplémentaire.

5. L'appareil de traitement d'image par réseau neuronal selon la revendication 4, dans lequel les types d'encrassement comprennent un ou plusieurs des éléments suivants : boue ; sable ; herbe ; poussière ; eau ; gouttes de pluie ; huile ; cire ; vaseline ; produit de polissage ; embruns salés ; transparent; opaque ; et autre.

6. L'appareil de traitement d'image par réseau neuronal selon la revendication 1, dans lequel ledit appareil est en outre configuré pour effectuer une segmentation d'encrassement basée sur ladite première carte de caractéristiques pour générer un masque pour ledit premier dispositif de capture d'image, ledit masque comprenant un tableau d'éléments, chaque élément indiquant l'encrassement de toute image produite par ledit premier dispositif de capture d'image à proximité dudit élément.

7. L'appareil de traitement d'image par réseau neuronal selon la revendication 6, dans lequel ledit appareil est agencé pour combiner ledit masque avec une carte de caractéristiques dérivée de ladite première carte de caractéristiques pour effectuer ladite détection d'objet.

8. L'appareil de traitement d'image par réseau neuronal selon la revendication 1, dans lequel l'appareil est agencé pour effectuer une classification de caractéristiques en :
concaténant ladite première classification et la ou les classifications supplémentaires ; et en alimentant ladite classification concaténée à un réseau neuronal entièrement connecté pour fournir au moins ladite classification d'encrassement améliorée.

9. L'appareil de traitement d'image par réseau neuronal selon la revendication 1, dans lequel l'appareil est agencé pour obtenir des valeurs de niveau de lumière respectives (L1...L2n) associées à chacune desdites première et au moins une images supplémentaires et pour combiner lesdites valeurs de niveau de lumière avec ladite première classification et la ou les classifications supplémentaires pour fournir la classification améliorée indiquant l'encrassement de ladite première image.

10. L'appareil de traitement d'image par réseau neuronal selon la revendication 1, dans lequel l'appareil est agencé pour obtenir une ou plusieurs valeurs de sortie de capteur (T) et pour combiner lesdites valeurs de sortie de capteur avec ladite première classification et la ou les classifications supplémentaires pour fournir la classification améliorée indiquant l'encrassement de ladite première image.

11. L'appareil de traitement d'image par réseau neuronal selon la revendication 10, dans lequel le ou les capteurs comprennent au moins l'un des éléments suivants : un capteur de température ambiante interne du véhicule ; un capteur de température ambiante externe ; un capteur de pression ambiante externe ; un capteur d'humidité interne du véhicule ; et un capteur d'humidité externe.

12. L'appareil de traitement d'image par réseau neuronal selon la revendication 1, dans lequel les premier et chaque dispositifs de capture d'image supplémentaires sont chacun des dispositifs différents dans le groupe de : un dispositif de capture d'image orienté vers l'avant, un dispositif de capture d'image orienté vers l'arrière ; un dispositif de capture d'image orienté vers la gauche ; ou un dispositif de capture d'image orienté vers la droite.

13. L'appareil de traitement d'image par réseau neuronal selon la revendication 1, configuré pour répéter le traitement d'un ensemble d'images acquises à partir d'une pluralité de dispositifs de capture d'image, l'un différent des dispositifs de capture d'images étant désigné comme ledit premier dispositif de capture d'image.

14. L'appareil de traitement d'image par réseau neuronal selon la revendication 1, dans lequel les premier et chaque dispositifs de capture d'image supplémentaires sont des dispositifs de capture d'image optiques configurés pour obtenir des images en lumière visible.

15. Un véhicule comprenant : un appareil de traitement d'image par réseau neuronal selon la revendication 1 ; et un contrôleur répondant à ladite classification améliorée indiquant un encrassement affectant la première image pour ordonner à un système de nettoyage du véhicule d'effectuer un nettoyage de la lentille du premier dispositif de capture d'image.

16. Une méthode de traitement d'une image utilisant un appareil de réseau neuronal selon la revendication 1, la méthode comprenant : l'obtention d'une première image à partir d'un premier dispositif de capture d'image et d'une image supplémentaire respective à partir d'au moins un dispositif de capture d'image supplémentaire, où le premier dispositif de capture d'image a un champ de vision différent de celui du ou de chaque dispositif de capture d'image supplémentaire ; le traitement de chacune desdites première et de la ou chaque image supplémentaire à travers des premières instances respectives et des instances supplémentaires d'un réseau de traitement d'extraction de caractéristiques communes pour produire une première carte de caractéristiques respective et au moins une carte de caractéristiques supplémentaire, chacune ayant une résolution spatiale inférieure à celle desdites première et de la ou chaque image supplémentaire ; l'exécution d'une classification de caractéristiques en : traitant ladite première carte de caractéristiques à travers une première instance d'une couche entièrement connectée pour fournir un vecteur de caractéristiques de sortie correspondant à une première classification indiquant un encrassement de ladite première image ; traitant la ou chaque carte de caractéristiques supplémentaire à travers des instances supplémentaires de la couche entièrement connectée pour fournir au moins un vecteur de caractéristiques supplémentaire correspondant à une classification supplémentaire indiquant un encrassement respectif de ladite ou de chaque image supplémentaire, la classification étant sous forme d'un tableau unidimensionnel de caractéristiques ; chaque élément du tableau (C1...C14) comprenant un score de confiance correspondant à une classe d'encrassement, et combinant lesdits premiers vecteurs de caractéristiques de sortie et ledit ou lesdits vecteurs de caractéristiques de sortie supplémentaires pour fournir des classifications d'encrassement (C1'...C14') pour la première image correspondante (112) ainsi qu'une classification générique d'encrassement améliorée indiquant l'encrassement de ladite première image ; et en réponse à ladite classification améliorée n'indiquant pas d'encrassement dudit premier dispositif de capture d'image, effectuer un traitement supplémentaire de ladite première image basé sur ladite première carte de caractéristiques jusqu'à ce que la classification soit ré-exécutée.

17. Un produit de programme informatique qui, lorsqu'il est exécuté sur un dispositif informatique, est agencé pour exécuter la méthode selon la revendication 16.
